**Europäisches Patentamt**

**European Patent Office**

**Office européen des brevets**

(19)

(11) Publication number: **0 021 726**

**A1**

(12) # EUROPEAN PATENT APPLICATION

(21) Application number: **80301968.6**

(22) Date of filing: **11.06.80**

(51) Int. Cl.³: **F 16 B 5/00**
**F 16 B 12/10**

(30) Priority: **11.06.79 US 47142**

(43) Date of publication of application:
**07.01.81 Bulletin 81/1**

(84) Designated Contracting States:
**DE FR GB**

(71) Applicant: **STEELCASE INC.**
**1120 36th Street, S.E.**
**Grand Rapids, Michigan(US)**

(72) Inventor: **Wisniewski, Joseph Michael**
**14093 12th Avenue**
**Marne, Michigan(US)**

(74) Representative: **Robinson, Anthony John**
**Metcalf et al,**
**Kilburn & Strode 30 John Street**
**London, WC1N 2DD(GB)**

(54) **Trim fastening arrangement and chair back with fastening arrangement.**

(57) A trim fastening arrangement, particularly for chair backs, in which hollow bosses (4) are integrally moulded on the inside of a trim member (2) for receiving the heads (8) of fasteners (6), held in place by a spring retainer (9). The projecting fastener ends have flexible ribs and are received in apertures (5) in a support member (41), for example an upholstered chair back.

EP 0 021 726 A1

.../...

Croydon Printing Company Ltd.

FIG. 6

FIG. 9

1.

## TRIM FASTENING ARRANGEMENT AND CHAIR BACK
## WITH FASTENING ARRANGEMENT

This invention relates to trim fastening arrangements, and in particular to an arrangement for attaching trim members to furniture items. The invention particularly relates to a chair back and fastening arrangement therefor.

In the field of furniture design, there is at present a decided preference for furnishings with a smooth, sleek appearance, and fluent design lines. This preference is particularly prevalent in the area of commercial seating, such as that used in offices, airports, railway stations and the like.

Trim members can be used on furniture items to cover the protruding joints and fasteners thereof. Designers often cover upholstered chair backs with trim members. However, the fastening members which attach the trim member to the support member often deface the exterior surface of the trim member, and/or provide a rather insecure interconnection. In moulded plastic seating parts, attempts to mould fastenings on the interior surface of the trim parts, such as chair back covers, and the like, have resulted in the formation of "sink marks" on the exterior surface of the chair member, which is caused by the shrinking of the moulded plastic material in the die as it cools and solidifies. Such sink marks interrupt the exterior surface of the trim member and create quite noticeable blemishes thereon which detract from the appearance of the furniture.

According to one aspect of the present invention, a fastening arrangement for connecting a trim member with a support member comprises a first aperture disposed in an interior surface of said trim member and defined by a side wall; a second aperture disposed in an interior surface of said support member, and defined by a side wall; the support member aperture being aligned with the trim member aperture for interconnecting the trim member and the support member in a mating, overlying relationship; one of the apertures having a stop surface projecting inwardly of the associated side wall to form a fastener head stop; a fastener having fastening means on one end thereof extending into and engaging the other of the apertures and a head on the other end, and having a marginal shape substantially identical with said one aperture for telescopic reception thereinto; the fastener head having an outer free end surface, and including a head depth sufficient to retain the fastener in a coaxial relationship with said one aperture and resist lateral movement therefrom; and a retainer having a body portion engaging the fastener head, and an outer marginal edge resiliently and frictionally engaging an inner surface of the side wall of said one aperture; the retainer retaining the outer free end of the fastener head abuttingly against said one aperture stop surface, whereby the fastener is firmly connected within said one aperture side wall, and projects outwardly therefrom to securely connect the trim member with the support member without defacement of the exterior surface of the trim member. This fastening arrangement

3.

makes it possible securely to fasten a trim member to a support member such as a chair back without defacing the exterior surface of the trim member.

According to another aspect of the invention, there is provided a chair back and fastening arrangement therefor, the chair back comprising a moulded plastic chair back cover and an upholstered chair back, the fastening arrangement fastening the cover to the back and comprising: a boss formed integrally with the chair back cover and projecting from an interior surface thereof; the boss having an interior aperture defined by a side wall and a closed end, whereby an exterior surface of the chair back cover is smooth and substantially uninterrupted; the boss aperture including an interior end surface projecting radially inwardly of the side wall to form a fastener head stop; an aperture disposed through a rear support panel of the upholstered seat back, and being defined by a side wall; the seat back aperture being aligned with the boss aperture for interconnecting the chair back cover and the rear support panel in a mating, overlying relationship; a fastener having fastening means on one end thereof extending through the seat back aperture and interconnecting the fastener to the seat back, and head means disposed on the other end of the fastener seated in the boss against the interior end surface; and a spring grip retainer disposed about the fastener, and including a body portion abutting the head means and a plurality of radially outwardly extending teeth which resiliently and frictionally engage an inner surface of

4.

the side wall of the boss aperture; whereby said fastener is firmly connected within the boss and projects outwardly thereof, such that the fastening means of the fastener is inserted into the seat back aperture to securely connect the chair back cover to the rear support panel without defacement of the outer surface of the chair back cover.

Advantages of these aspects of the invention and advantages of preferred features set out in the subsidiary claims will become apparent from the following detailed description.

The invention may be carried into practice in various ways but one seating arrangement and the fastener arrangement by which a seat back trim is fastened to the seat back support will now be described by way of example with reference to the accompanying drawings, in which:

Figure 1 is an exploded perspective view of a seating arrangement having a fastening arrangement embodying the present invention;

Figure 2 is an enlarged elevation of a fastener forming part of the fastening arrangement;

Figure 3 is a front end view of the fastener;

Figure 4 is a plan view of an interior surface of a seat back portion of the seating arrangement;

Figure 5 is a side elevational view of the seat back;

Figure 6 is a vertical cross sectional view of the seat back taken through a medial portion thereof;

Figure 7 is an enlarged, plan view of a fastener

5.

retainer forming part of the fastening arrangement;

Figure 8 is a cross section of the retainer taken along the line VIII-VIII in Figure 7; and

Figure 9 is a fragmentary enlarged cross sectional view of the seat back, showing the fastener engaged therewith.

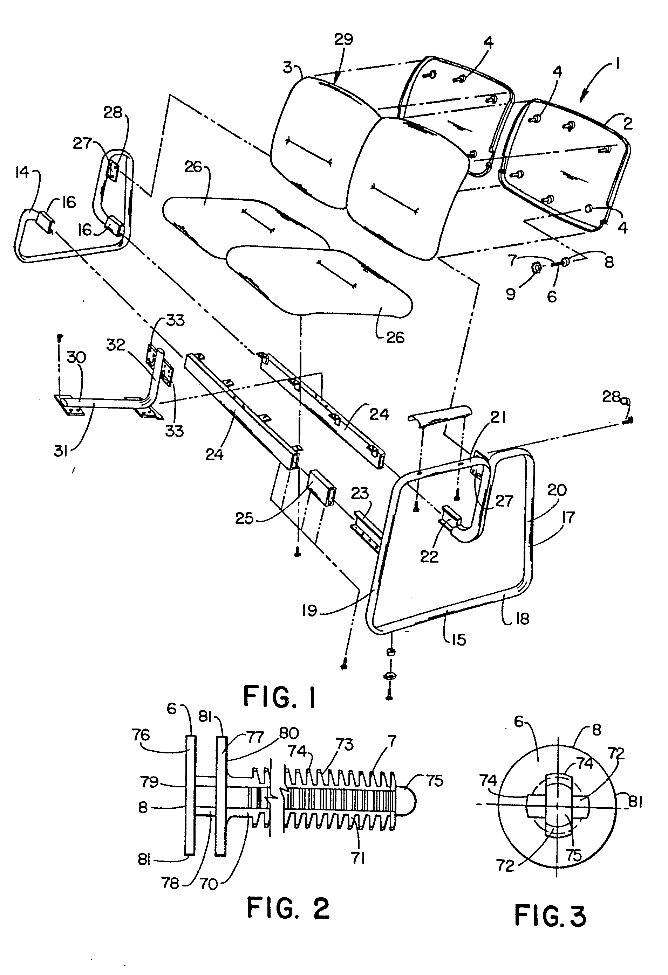

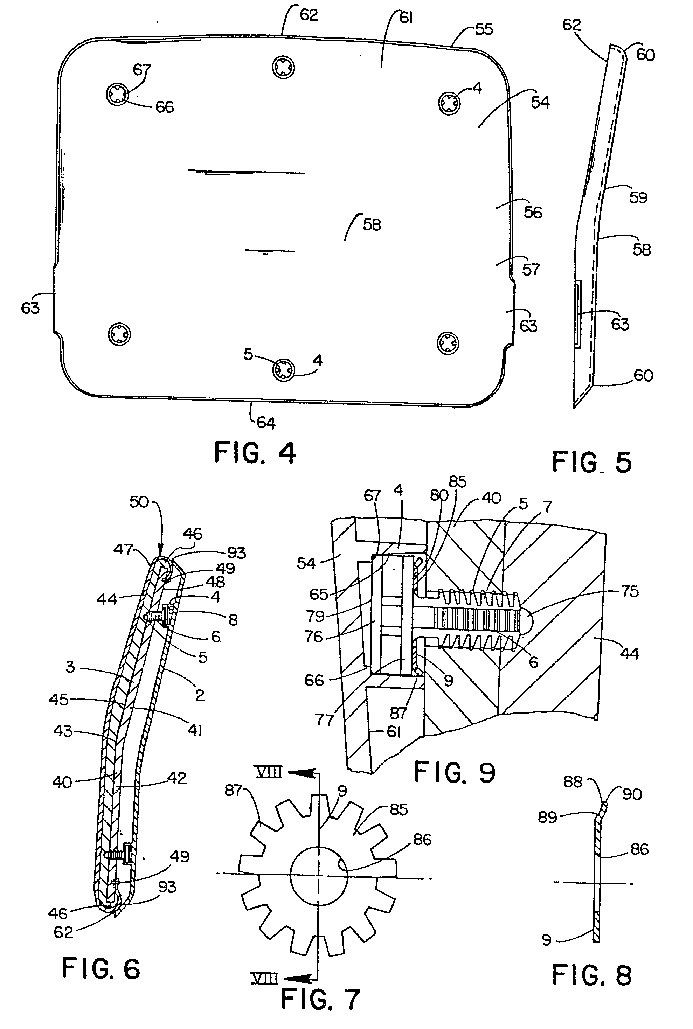

Figure 1 shows a fastening arrangement 1 which is adapted for connecting a back trim member 2 to a supporting back member 3 (Figures 1 and 6). The interior surface of the trim member 2 includes a plurality of spaced-apart, tubularly-shaped sockets or bosses 4 which have closed inner ends so as not to interrupt or deface the exterior surface of the trim member (Figures 1 and 4). Mating apertures 5 (Figure 6) are disposed in the interior surface of the support member 3 and are aligned therewith to interconnect the trim and support members in an overlying relationship. A fastener 6 (Figure 1) is provided for each boss 4, and includes ribs 7 on one end thereof which engage the side wall of an associated support aperture 5, and a head 8 which is shaped for telescopic insertion into a boss (Figure 2). The fastener head 8 has a depth sufficient to securely retain the fastener coaxially within the boss 4 and resist lateral movement therein. A retainer 9 is pushed over the ribbed end 7 of the fastener, and engages the inner surface of the fastener head 8 and includes an outer marginal edge which resiliently and frictionally engages the inside surface of the boss 4 and resiliently urges the fastener into the boss, thereby securely connecting the fastener in the trim member. The ribbed ends 7 of the fasteners 6 are then positioned at and inserted through the associated support member apertures 5, thereby securely attaching the trim member 2 to the support member 3 without defacement of the exterior surface of the trim member.

The illustrated fastening arrangement 1 is particularly adapted for use in conjunction with modularized seating arrangements, such as the unit shown in Figure 1. The illustrated seating arrangement includes an armless end frame 14 and an armed end frame 15 disposed on the right and left hand sides respectively of the chair assembly. The armless end frame 14 includes connecting means 16 disposed on arcuately and inwardly extending ends of the frame for connecting the same with another end frame. The armed end frame 15 has the end portions thereof interconnected to form a loop 17 having a base 18, a front leg 19, a back leg 20, and an arm 21, and the free ends of the frame assembly depend downwardly from the arm 21 and extend arcuately and inwardly toward the armless end frame and include connecting means 22 thereon. The front leg 19 of the armed end frame 15 also includes an inwardly extending bracket 23 to facilitate interconnection of the frame members. The connecting means 22 and bracket 23 of the armed end frame have an elevation and mutual spacing which is substantially commensurate with the two connecting means 16 of the armless end frame 14, whereby the armed and armless end frames are interchangeable. A pair of cross braces 24 are provided at forward and rearward portions of the chair arrangement, and include end portions adapted to telescopically receive the connecting means 16 and 22, and the bracket 23 therein, so as to retain the end frames 14 and 15 in a spaced apart, substantially vertically oriented relationship.

A spacer 25 is provided for use in conjuction with the armed end frame 15, and is adapted to be placed over the innermost portion of the bracket 23 adjacent the front leg 19, so as to centre the forward cross brace 24, and impart a pleasant appearance to the chair design. In the illustrated example, the cross braces 24 are elongate, and adapted to support thereon a pair of seats 26 disposed in a side-by-side relationship. A seat back fastening plate 27 is provided on both the armless and armed end frames 14 and 15, and projects inwardly thereof. Each of the fastening plates 27 includes a plurality of apertures 28 therethrough which are shaped to receive means, such as threaded fasteners 28a, to attach a seat back 29 to the respective end frame member. An intermediate seat back support 30 includes a base portion 31 which extends between and is connected with the cross braces 24, and an upstanding column 32 with a pair of opposing fastening plates 33 projecting outwardly thereof for connecting the interior sides of the seat backs 29 thereto.

In the illustrated example, the trim member 2 comprises a chair back cover, and the support member 3 comprises an upholstered seat back. However, it is to be understood that the fastening arrangement being described is adapted to interconnect a variety of

8.

different types of trim members with an associated support member.

The seat back illustrated in Figure 6 includes a rigid support panel 40 which is adapted to form and support the entire chair back assembly. The support panel 40 is preferably contoured to provide additional user comfort, and in this example, includes upper and lower panel portions 41 and 42 respectively, which are mutually disposed at a slight angle, and intersect at a junction 58. The panel member 40 is constructed of a single sheet of plywood, and is formed to the desired contour or shape. The apertures 5 extend through the panel member 40, and are adapted to receive the ribbed portions of the fasteners 6 therein. Each of the panel member apertures 5 includes a central axial axis which is oriented parallel with the axial axes of the other panel member apertures. The panel member apertures 5 are disposed in a spaced apart fashion about the marginal edge of the panel member 40, and in the illustrated structure, six apertures are provided.

A layer of cushioned material 44, such as expanded synthetic resin material, extends over the inside surface 45 of the support panel 40 and the marginal end edges 46 thereof. A flexible cover layer 47 overlies the cushion layer 44 and extends around the marginal end edges 46 of the panel member and is fastened to the rearward surface 48 of the support panel 40 by suitable fasteners, such as the illustrated staples 49. The cover layer 47 is preferably constructed of a durable material, such an vinyl, cloth, leather, or other suitable upholstery material. The support panel 40, cushion layer 44 and cover layer 47 are assembled prior to connection with the chair frame members and form an upholstered chair back assembly which is designated herein by the reference numeral 50.

As best illustrated in Figures 4 and 5, the chair back cover is shaped to encase the rear surface of the chair back assembly 50, and includes a contoured base 54 having a side wall 55 upstanding from an interior surface thereof, and extending about the marginal edge of the base 54. The back cover 2 is contoured in a manner which is substantially identical with the support panel member 40, and in the illustrated example includes upper and lower panel portions 56 and 57 which are mutually angled parallel with support panel portions 41 and 42 respectively, and intersect along a juncture 58. The exterior surface 59 of the back cover 2 is preferably a smooth, protrusion-free, uninterrupted surface, having a very pleasant appearance. The exterior surface 59 may be provided with a textured or other decorative design thereon, in which case the design extends uniformly across the back cover, and does not include any blemishes, sink marks, or other perceptible variations which would detract from the chair's appearance. The marginal edge 60 of the base 54 is formed arcuately into the side wall 55, which in turn extends outwardly of the inside surface 61 of the back cover 2. The outer free edge 62 of the side wall 55 is adapted to mate with the rear portion of the up-

10.

holstered chair back assembly 50, preferably at a point thereon slightly inwardly of the outermost periphery of the seat back assembly 50, whereby the edge 62 engages the cover layer 47 as it bends arcuately about the end edge 46 of the support panel member 40. A slot 63 is formed in the side wall 55 at opposing sides of the back cover 2 adjacent the lower edge 64 thereof to receive the fastening plates 27 therethrough.

A plurality of tubularly-shaped sockets or bosses 4 extend outwardly of the inside surface 61 of the cover base 54, and form the apertures into which the fastener heads 8 are received. The illustrated bosses 4 are moulded integrally with the back cover 2, and have a cylindrical shape with an axial axis, wherein the axis of each of the bosses is disposed in a mutually parallel orientation. The bosses each have a depth which is sufficient to receive the fastener head 8 and retainer 9 therein, and preferably have a cylindrical shape wherein the interior side wall 65 (Figure 9) is tapered slightly inwardly, whereby the fastener head is wedgingly retained in the boss. Each of the bosses 4 has a side wall thickness which is substantially less than the thickness of the cover base 54, whereby any very slight sink marks which might be formed on the outer exterior surface 59 of the back cover 2 at the location of the bosses are not perceptible from a casual inspection. The side wall thickness of the boss should not be greater than two thirds of the thickness of the ajjacent portion of the back cover base 54, and is

11.

preferably one half of said thickness. Although the side walls of the bosses are relatively thin, so as to prevent the formation of perceptible sink marks on the exterior surface of the back cover 2, the telescopically fitted arrangement with the fasteners 6 provides a very sturdy and secure interconnection of the back covers 2 with the upholstered back panel assembly 50. The bosses 4 each include an interior end surface which projects inwardly of the associated boss side wall to form a stop for the fastener head. In the illustrated structure, the stop comprises at least three projections or lands 66 (Figure 4) which are formed integrally with and project inwardly from the interior surface 65 of the boss side wall. Each of the lands 66 includes a free end surface 67 which is disposed substantially mutually coplanar with the other land end surfaces, and is adapted to abut the fastener head 8 and locate the fastener squarely within the boss. Because the volume of material adjacent the interior surface of the cover base 54 to form the lands 66 is quite small, compared to a full rim or ledge, the severity of the sink marks incurred in forming this structure is greatly reduced, such that the former are not generally perceptible.

As best illustrated in Figures 2, 3 and 9, the fastener 6 is an elongate structure which is adapted to connect the back cover 2 with the upholstered back assembly 50. The fastener 6 comprises a shank 70 having a portion 71 on which the ribs 7 are mounted. The illustrated ribs comprise two sets of oppositely

12.

oriented fins 72 which project radially outwardly of the shank 70 at 90° increments, as shown in Figure 3. The leading surface 73 of the ribs is inclined slightly rearwardly toward the head 8, and the outmost edges 74 thereof when viewed axially are arcuate in a coaxial relationship with the shank 70.  The distance between the outer edge 74 of opposingly oriented ribs is slightly greater than the diameter of the aperture 5 into which the fastener is to be inserted.  As shown in Figure 9, the ribs are compressed and resiliently engage the interior surface of the aperture 5, and ribs exterior thereof extend through the aperture into the cushion material 44 and resiliently expand to their fully extended state so as to provide a barb or obstruction to resist removal of the fastener from the upholstered back panel.  However, because the ribs are flexible, the fastener may be removed from the back panel aperture by applying axial force thereto with a special tool so as to remove the chair back cover from the upholstered chair back to repair the seat, and/or modify the seating arrangement to a new configuration. The free end 75 of the fastener 6 has a bulbous shape which guides the fastener into the mating support panel aperture.  The illustrated fastener head includes a pair of disc shaped head elements 76 and 77 which are disposed on outer and inner portions respectively of the fastener shanks 70.  The two head portions 76 and 77 are integrally connected by a column portion 78, are shaped to be received telescopically within an associated boss 4, and are spaced apart a distance sufficiently to retain

13.

the fastener in a coaxial relationship within the boss, and to resist lateral movement therefrom. The dual head design provides a space between the heads, and thereby realizes a substantial material saving without reducing the structural integrity of the fastener. The outer head 76 includes a free end surface 79, and the inner head 77 includes an innerface 80. Both of the heads 76 and 77 include an outer peripheral edge 81 which is disposed coaxially with the shaft 70 and the boss 4, and has a diameter which is substantially coextensive with the inside diameter of the boss 4.

As best illustrated in Figures 7 and 8, the retainer 9 is in the shape of a washer, having an annular body section 85, and a centrally disposed aperture 86 with a diameter which is slightly greater than the spacing between opposite fastener ribs 7, such that the retainer may be threaded thereover. The retainer includes a plurality of teeth 87 which extend radially from the outer peripheral edge of the body 85, and are regularly spaced around the circumference thereof. The teeth 87 are inclined slightly away from the fastener head at an angle of about $15^\circ$ for purposes to be described in detail hereinafter. The retainer body 85 and teeth 87 are preferably integrally constructed of a rigid, resilient material, such as spring steel, to facilitate attachment of the fastener in an associated boss. The inner corner 88 of each of the teeth 87 is formed by perpendicularly oriented back and edge surfaces 89 and 90 respectively, and is sharp so as to gouge into and frictionally engage the interior surface of an associated boss side wall.

In use, the modular seating arrangement is constructed by first assembling a selected pair of right and left hand end frames by interconnecting the same with a pair of cross braces 24. The upholstered back assemblies 50 are then attached to the end frames by fastening the support panel 40 to the opposing fastening plates 27 on either side thereof with fasteners 28a. In this manner, the back assemblies 50 interconnect the end frames 14 and 15 and prevent transverse movement therebetween. The chair back covers 2 are connected with the upholstered chair back panel assemblies 50 by assembling a fastener 6 in each one of the bosses 4 which is located on the interior side of the back cover 2. A retainer 9 is first threaded over the shank portion of the fastener and is positioned abutting the inward face 80 thereof with the teeth 87 angled away from the fastener head 8. The inner and outer head members 76 and 77 are then inserted telescopically into the centre aperture of an associated boss 4, and are translated inwardly therein until the head face 79 abuttingly engages the end surface 67 of each of the lands 66, as shown in Figure 9. Because the interior side wall 65 of the boss is slightly tapered, the fastener heads are wedged securely therein when the fastener reaches the fully inserted position to form a dual fastener arrangement with the retainer. The retainer 9 is then inserted into the boss 4 by urging the same inwardly toward the fastener head in a direction coaxial with the fastener,

15.

either by hand or by means of a tool, such as a cylindrically-shaped mandrel (not shown) having an end edge which engages the body portion 85 of the retainer. As the retainer 9 is urged inwardly into the boss, the retainer teeth engage the inside surface 65 of the boss and are deformed or bent slightly radially inwardly by the contact therewith. The retainer is inserted into the boss until the body portion 85 thereof abuts the inner fastener face 80. The retainer teeth are urged radially outwardly by the resiliency of the retainer body and gouge into the interior surface of the boss side wall to securely retain the fastener head against the lands. Because the retainer teeth 87 are bent away from the fastener head 8, they facilitate insertion of the retainer into the boss, and also resist withdrawal thereof.

After a fastener has been assembled in each boss in the above described manner, the back cover 2 is aligned with the upholstered back panel member 3 in a manner such that the ribbed fastener ends 71 and the associated apertures 5 are disposed coaxially. The back cover 2 is then urged inwardly toward the back panel 3, whereby the fasteners are simultaneously inserted into the associated seat back apertures, thereby interconnecting the chair back cover and upholstered chair back. The cover 2 is converged with the upholstered back assembly 50 until the marginal edge 62 of the cover abuts the mating rolled over portion 93 of the assembly 50, and is resiliently sunk thereinto, such that the cover 2 and chair back 3 are secured tightly together. The engagement between the cushioned portion 93 of the chair back and the marginal edge 62 of the cover provides a neat juncture which is free of sharp edges. Further, because of the manner in which the cover 2 is inserted into and connected with the chair back 3, the present fastening arrangement can be used equally well with virtually any thickness of upholstery material.

17.

CLAIMS

1. A fastening arrangement for connecting a trim member (2) with a support member (3), the arrangement comprising:
a first aperture disposed in an interior surface of said trim member and defined by a side wall (4); a second aperture (5) disposed in an interior surface of said support member, and defined by a side wall; the support member aperture being aligned with the trim member aperture for interconnecting the trim member and the support member in a mating, overlying relationship; one of the apertures having a stop surface (67) projecting inwardly of the associated side wall to form a fastener head stop;
a fastener (6) having fastening means (71) on one end thereof extending into and engaging the other of the apertures and a head (8) on the other end, and having a marginal shape substantially identical with said one aperture for telescopic reception thereinto; the fastener head having an outer free end surface, and including a head depth sufficient to retain the fastener in a coaxial relationship with said one aperture and resist lateral movement therefrom; and
a retainer (9) having a body portion engaging the fastener head, and an outer marginal edge resiliently and frictionally engaging an inner surface of the side wall of said one aperture; the retainer retaining the outer free end of the fastener head abuttingly against said one aperture stop surface, whereby the fastener is firmly connected within said one aperture side wall, and projects outwardly therefrom to securely connect the trim member with the support member without defacement of the exterior surface of the trim member.

2. A fastening arrangement according to Claim 1 in which the support member is part of a furniture item.

3. A fastening arrangement according to Claim 2 in which the furniture item is a chair and the moulded plastic trim member is a seat back cover.

4. A fastening arrangement according to Claim 1 or Claim 2 or Claim 3 in which the first aperture has a closed end whereby an exterior surface of said trim member is not interrupted by said aperture.

5. A fastening arrangement according to any of Claims 1 to 4 in which fastening means comprises a plurality of outwardly projecting resilient ribs (71).

6. A fastening arrangement according to Claim 5 in which the ribs (71) are sized for frictional detachable engagement in said first aperture (5) whereby the trim member is removable from the support member for repair and modification.

19.

7.   A fastening arrangement according to any of Claims 1 to 6 in which the fastener head includes first and second spaced apart coaxially interconnected portions (76, 77) received telescopically within said one aperture.

8.   A fastening arrangement according to any of Claims 1 to 7 in which the trim member is of moulded plastic.

9.   A fastening arrangement according to Claim 8 in which said one aperture is disposed in said moulded plastic member.

10.  A fastening arrangement according to Claim 8 or Claim 9 in which said one aperture is formed by a cylindrically shaped boss moulded integrally with said moulded plastic trim member and extending from an inner surface thereof, and the boss has a side wall thickness which is less than the thickness of the trim member.

11.  A fastener arrangement according to any of Claims 1 to 10 in which the retainer comprises a spring grip disposed about the fastener adjacent an inward surface of the fastener head, the outer marginal edge of the retainer including a plurality of teeth (87) inclined away from the fastener head to resist withdrawal of the fastener head from said one aperture.

20.

12. A chair back and fastening arrangement therefor, the chair back comprising a moulded plastic chair back cover and an upholstered chair back, the fastening arrangement fastening the cover to the back and comprising:

a boss (4) formed integrally with the chair back cover (2) and projecting from an interior surface thereof; the boss having an interior aperture defined by a side wall and a closed end, whereby an exterior surface of the chair back cover is smooth and substantially uninterrupted; the boss aperture including an interior end surface (67) projecting radially inwardly of the side wall to form a fastener head stop;

an aperture (5) disposed through a rear support panel (40) of the upholstered seat back (3), and being defined by a side wall; the seat back aperture being aligned with the boss aperture for interconnecting the chair back cover and the rear support panel in a mating, overlying relationship;

a fastener (6) having fastening means (71) on one end thereof extending through the seat back aperture and interconnecting the fastener to the seat back, and head means (8) disposed on the other end of the fastener seated in the boss against the interior end surface; and

a spring grip retainer (9) disposed about the fastener, and including a body portion abutting the head means and a plurality of radially outwardly extending teeth (87) which resiliently and frictionally engage an inner surface of the side wall of the boss aperture; whereby said fastener is firmly connected within the boss and projects outwardly thereof, such that the fastening means of the fastener is inserted into the seat back aperture to securely connect the chair back cover to the rear support panel without defacement of the outer surface of the chair back cover.

13. A chair back and fastening arrangement according to Claim 12 in which the head means comprises:
a pair of spaced apart heads (76, 77), each of the heads having a disc shape for telescopic reception into the boss aperture; the heads having an outer free end surface (79, 80) and being spaced apart a distance sufficient to retain the fastener in a coaxial relationship within the boss aperture and resist lateral movement therefrom.

14. A chair back and fastening arrangement according to Claim 12 or Claim 13 in which the fastening means comprises outwardly projecting resilient ribs (71) on the fastener.

15. A chair back and fastening arrangement according to Claim 14 in which the fastener ribs are semi-rigid, and the chair back aperture is sized for detachable connection therebetween, whereby the chair back cover and the upholstered chair back can be disassembled for repair and modification.

22.

16.  A chair back and fastening arrangement according to any of Claims 12 to 15 in which:

the chair back cover and the upholstered chair back each have a contoured shape comprising at least first and second panels (56, 57) mutually disposed at an angle;

at least one cover boss and back aperture is disposed in each of the first and second panels;  and

the axes of the bosses, fasteners and seat back apertures are disposed in a mutually parallel relationship, whereby the fasteners can be simultaneously inserted into the associated seat back apertures, to interconnect the chair back cover and the upholstered chair back.

17.  A chair back and fastening arrangement according to any of Claims 12 to 16 in which the said boss end surface and fastener head stop comprises at least three lands (66) moulded integrally with and projecting inwardly of an interior surface of the boss side wall, each of the lands including a free end surface (67), the free end surfaces being disposed substantially mutually coplanar and adapted to abut a fastener head and locate the same within the boss without defacement of the outer surface of the chair back cover.

18.  A chair back and fastening arrangement according to any of Claims 12 to 17 in which the boss side wall is tapered radially inwardly away from the outer end.

FIG. 1

FIG. 2

FIG. 3

0021726

FIG. 4

FIG. 5

FIG. 6

FIG. 7

FIG. 9

FIG. 8

# EUROPEAN SEARCH REPORT

European Patent Office

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | DE - B - 1 625 393 (LANGENSIEPEN) <br> * fig. 3 * <br> -- | 1,4,5, 6,7 | F 16 B 5/00 <br> F 16 B 12/10 |
| | DE - A - 1 935 218 (LEITNER) <br> * fig. 1 * <br> -- | 1 | |
| | DE - U - 1 923 132 (HETTICH) <br> * fig. 15 * <br> -- | 1,2 | |
| | FR - A - 1 598 815 (REGUITTI S.P.A.) <br> * fig. 1 * <br> -- | 1 | TECHNICAL FIELDS SEARCHED (Int.Cl.) |
| | FR - A1 - 2 360 006 (ITW FASTEX ITALIA S.P.A.) <br> * fig. 5 * <br> -- | 1,2 | F 16 B 5/00 <br> F 16 B 7/00 <br> F 16 B 12/00 <br> F 16 B 17/00 |
| | GB - A - 1 251 173 (INDUSTRIE SPECIALIZ- ZATE ARTICOLI PLASTICI S.P.A.) <br> * fig. 5 * <br> -- | 1 | |
| | GB - A - 1 447 387 (BLUM GMBH) <br> * fig. 1 * <br> -- | 1,2 | CATEGORY OF CITED DOCUMENTS |
| | US - A - 3 225 641 (HARRIS et al.) <br> * fig. 1 * <br> -- | 1 | X: particularly relevant <br> A: technological background <br> O: non-written disclosure <br> P: intermediate document <br> T: theory or principle underlying the invention |
| | US - A - 4 047 822 (LEHMANN) <br> * fig. 1 * <br> -- ./.. | 1,2 | E: conflicting application <br> D: document cited in the application <br> L: citation for other reasons |
| | The present search report has been drawn up for all claims | | &: member of the same patent family, corresponding document |

| Place of search <br> Berlin | Date of completion of the search <br> 24-09-1980 | Examiner <br> ZAPP |
|---|---|---|

EPO Form 1503.1  06.78

**European Patent Office**

**EUROPEAN SEARCH REPORT**

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| A | FR - A1 - 2 302 440 (NEMECEK et al.) | | |

TECHNICAL FIELDS SEARCHED (Int. Cl.)